# EUROPEAN PATENT APPLICATION

(11) **EP 1 775 918 A2**
(43) Date of publication of application: **18.04.2007**
(21) Application number: 06122263.4
(22) Date of filing: 13.10.2006
(51) Int. Cl.: H04M 1/02, G06F 3/03

(54) **Apparatus and method for photographing erect image in portable communication terminal**

(30) Priority: 14.10.2005 KR 20050097171
(71) Applicant: Samsung Electronics Co., Ltd., Suwon-si, Gyeonggi-Do (KR)
(72) Inventor: Lim, Seok-Hun, Suwon-si Gyeonggi-do (KR)
(74) Representative: Zimmer, Franz-Josef

(57) **Abstract**

Provided is an apparatus and method for photographing an erect image in a portable communication terminal. In the method, a rotational angle of the portable communication terminal is measured while a photograph is taken. A photographing direction of the portable communication terminal is determined according to the measured rotational angle. The photographed image is rotated and stored such that the photographed image becomes an erect or upright image.

## Description

The present invention relates generally to an apparatus and method for photographing an erect image in a portable communication terminal having four photographing directions which depend on a rotational angle of the portable communication terminal measured by a movement detection unit, in which an image photographed in each of the four photographing directions is rotated and stored as an erect image.

Recently, portable communication terminals such as mobile terminals, Personal Digital Assistants (PDAs) and the like are being widely used. In addition to voice communication, schedule management, and other basic functions, portable communication terminals are being manufactured with an increasing range of applications, covering still image and video recording using built-in digital cameras, receiving and playing satellite TV broadcasts, document editing, and games. Thus, users of these terminals are provided with such various functions.

In particular, since a portable communication terminal provided with a camera does not discriminate between horizontal and vertical photographing orientations, it always stores a photographed image in a horizontal-to-vertical ratio of 4:3 regardless of how the terminal was rotated when the image was captured. Thus, a photographed image may be stored as a non-erect (i.e. not in an upright position.) image depending on the rotation of the terminal when the image was captured.

When a user of the mobile communication terminal desires an erect image, the user must undergo the inconvenience of having to preset an image saving mode before photographing the image, or rotating the image after it is photographed.

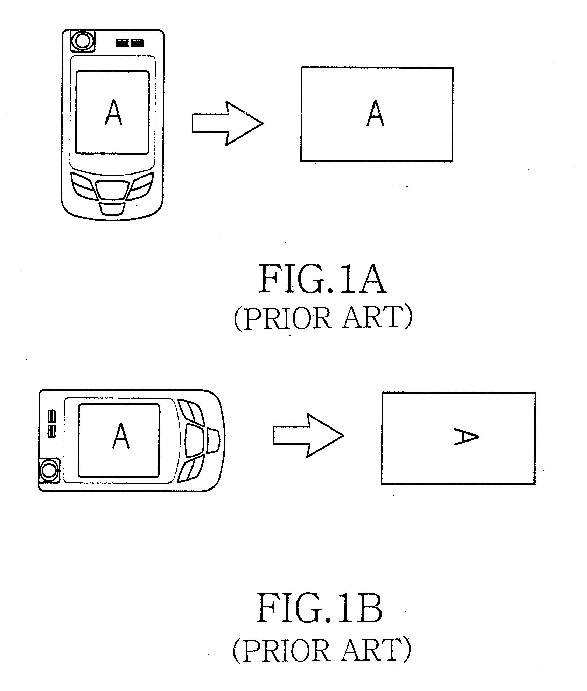

Hereinafter, images photographed at different rotated positions of a mobile communication terminal will be described with reference to FIGs. 1A through 1D.

FIG. 1A shows an image which is stored when the English character 'A' is photographed from a first angular orientation of the mobile communication terminal. In FIG. 1A, since taking the photograph from the first angular orientation is performed without rotating the mobile communication terminal (from a normally-used position), the image is stored as an erect image, in an upright position.

FIG. 1B shows an image which is stored when the English character 'A' is photographed from a second angular orientation of the mobile communication terminal. In FIG. 1B, since taking the photograph from the second angular orientation is performed after rotating the mobile communication terminal counterclockwise by 90° from the first angular orientation, the photographed image is stored in a state rotated clockwise by 90° from an erect image, in this case on its side.

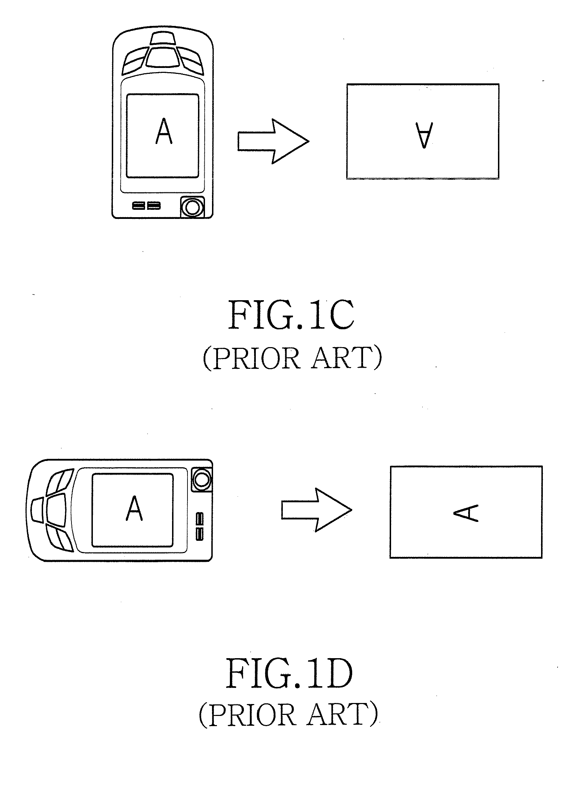

FIG. 1C shows an image which is stored when the English character 'A' is photographed from a third angular orientation of the mobile communication terminal. In FIG. 1C, since taking the photograph from the third angular orientation is performed after rotating the mobile communication terminal counterclockwise by 180° from the first angular orientation, the photographed image is stored in a state rotated clockwise by 180° from an erect image, in this case upside down.

FIG. 1D shows an image which is stored when the English character 'A' is photographed from a fourth angular orientation of the mobile communication terminal. In FIG. 1D, since taking the photograph from the fourth angular orientation is performed after rotating the mobile communication terminal counterclockwise by 270° from the first angular orientation, the photographed image is stored in a state rotated clockwise by 270° from an erect image, in this case on its side, opposite to that shown in FIG. 1B.

Therefore, an apparatus and method for storing an image photographed by a mobile communication terminal as an erect or upright image are required.

The present invention is designed to substantially solve at least the above problems and/or disadvantages and to provide at least the advantages below. Accordingly, the object of the present invention is to provide an apparatus and a method for photographing an erect image in a portable communication terminal that can store a photographed image as an erect image regardless of a rotational orientation of the portable communication terminal.

This object is solved by the subject matter of the independent claims.

Preferred embodiments are defined by the subject matter of the dependent claims.

An aspect of the present invention is to provide apparatus and method for photographing an erect image in a portable communication terminal having four photographing directions divided depending on a rotational angle of the portable communication terminal measured by a movement detection unit in which an image photographed in each of the four photographing directions is rotated and stored as an erect or upright image.

According to one aspect of the present invention, an apparatus for photographing an erect image in a portable communication terminal, includes a movement detection unit for measuring a rotational status of the portable communication terminal; a camera unit for auto-focusing an object to be photographed and photographing the object; and a controller which, when a photographing key is input and the portable communication terminal is in a movement detection photographing mode, controls the movement detection unit to measure a rotational angle of the portable communication terminal, determines a photographing direction of the portable communication terminal corresponding to the rotational angle, and rotates and stores the image photographed according to the determined photographing direction into an erect image.

According to another aspect of the present invention, a method for photographing an erect image in a portable communication terminal includes measuring a rotational angle of the portable communication terminal while taking a photograph; determining a photographing direction of the portable communication terminal according to the measured rotational angle; and rotating and storing the photographed image such that the photographed image becomes an erect image.

The present invention will become more apparent from the following detailed description when taken in conjunction with the accompanying drawings in which:
FIG. 1A shows an image which is stored when the English character 'A' is photographed from a first angular orientation of the mobile communication terminal;
FIG. 1B shows an image which is stored when the English character 'A' is photographed from a second angular orientation of the mobile communication terminal;
FIG. 1C shows an image which is stored when the English character 'A' is photographed from a third angular orientation of the mobile communication terminal;
FIG. 1D shows an image which is stored when the English character 'A' is photographed from a fourth angular orientation of the mobile communication terminal;
FIG. 2 is a block diagram of an apparatus for photographing an erect image in a portable communication terminal according to the present invention;
FIG. 3A shows a procedure of photographing and storing the English character 'A' from a first angular orientation according to the present invention in which the photographed image is stored as an erect or upright image without any rotation;
FIG. 3B shows a procedure of photographing and storing the English character 'A' in a second angular orientation according to the present invention in which the photographed image is rotated and stored as an erect image;
FIG. 3C shows a procedure of photographing and storing the English character 'A' from a third angular orientation according to the present invention in which the photographed image is rotated and stored as an erect image;
FIG. 3D shows a procedure of photographing and storing the English character 'A' from a fourth angular orientation according to the present invention in which the photographed image is rotated and stored as an erect image; and
FIG. 4 is a flow chart showing a method of storing a photographed image as an erect image in a portable communication terminal according to the present invention.

Preferred embodiments of the present invention will be described herein below with reference to the accompanying drawings. In the following description, well-known functions or constructions are not described in detail since they would obscure the invention in unnecessary detail.

Meanwhile, because mobile communication terminal consumers are demanding units with diverse manipulating methods and multi-functional capability, some mobile communication terminals are now produced with movement detection units to supplement the various manipulating methods and functions.

These movement detection units are a type of acceleration measuring device that can determine movement of a portable communication terminal using directional acceleration data. The movement detection unit measures acceleration along three axes (an X-, Y-, and a Z-axis) and then derives the angle and movement of the portable communication terminal using variations in the acceleration.

Hereinafter, a portable communication terminal of the present invention provided with a movement detection unit and a camera module, includes, but is not limited to, a cellular phone, a Personal Communication System (PCS), a Personal Data Assistant (PDA), an International Mobile Telecommunication-2000 (IMT-2000) phone. The invention should be construed to be applicable to all photographing apparatuses having a movement detection unit and a camera module. Hereinafter, an apparatus and method for for photographing an erect image in a portable communication terminal according to the present invention will be described in detail.

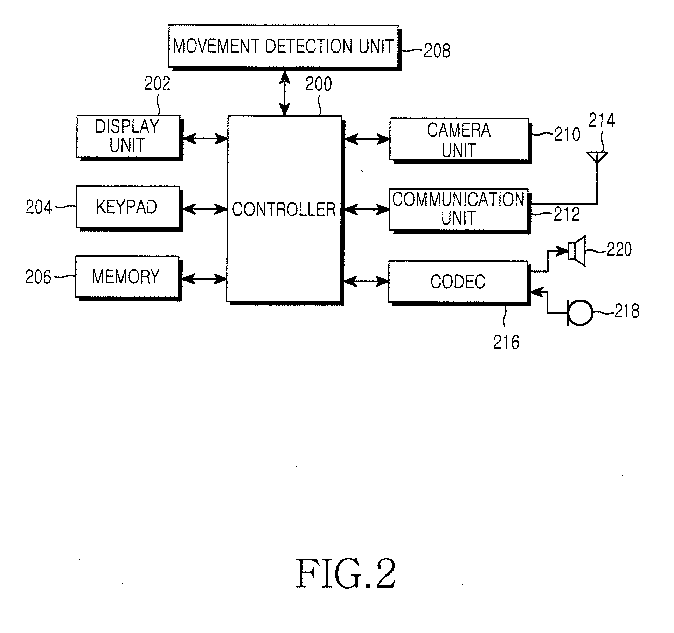

Referring to FIG. 2, a portable communication terminal of the present invention includes a controller 200, a display unit 202, a keypad 204, a memory 206, a movement detection unit 208, a camera unit 210, a communication unit 212, an antenna 214, a CODEC 216, a microphone 218, and a speaker 220.

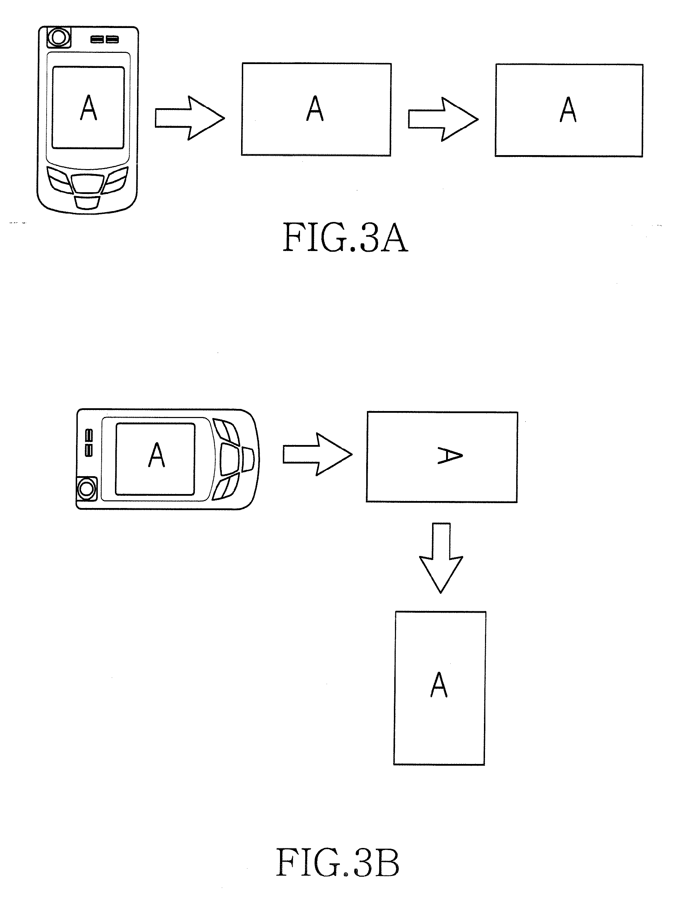

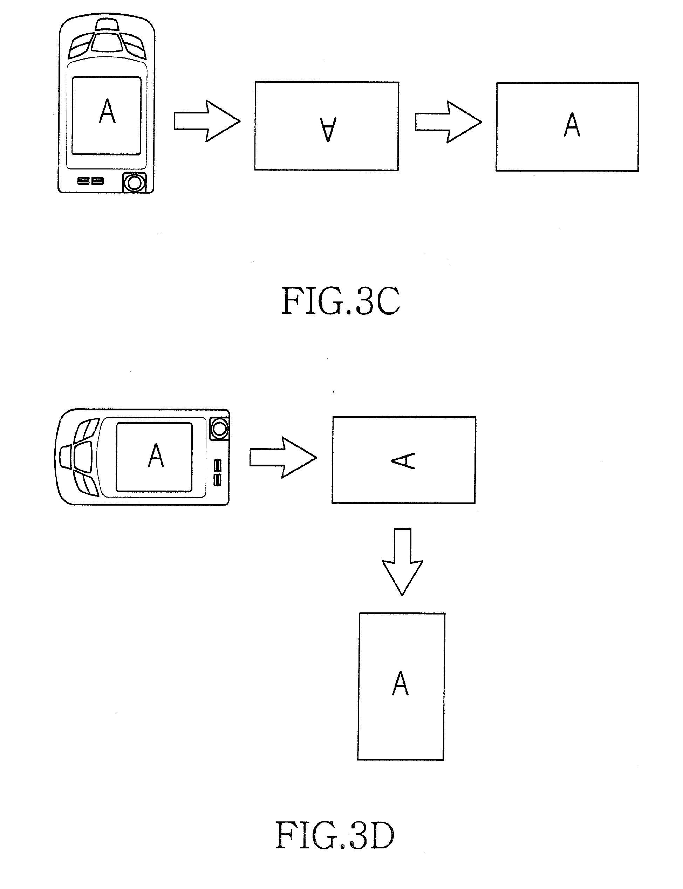

The controller 200 controls an overall operation of the portable communication terminal. For example, the controller 200 processes and controls voice communication and data communication, and measures a rotational angle of the portable communication terminal using the movement detection unit 208 in a photographing mode, divides a direction of the portable communication terminal into four directions depending on the measured rotational angle, rotates an image photographed in each of the four directions such that the photographed image is an erect or upright image, and stores the photographed image as an erect image. A detailed description about the four directions and the rotating and storing of the photographed image will be described below with reference to FIG. 3.

Also, the controller 200 outputs the photographed image as an erect image when it is intended to attach the photographed image to a multimedia messaging service (MMS) message.

The display unit 202 displays, among other things, status information (or an indicator) generated during operations, numerals and characters, moving pictures and still pictures. A color liquid crystal display (LCD) may be used for the display unit 202.

The keypad 204 includes numeric keys of digits 0-9 and a plurality of function keys, such as a Menu key, a Cancel (Delete) key, a Confirmation key, a Talk key, an End key, an Internet Connection key, and Navigation keys (▲/▼/◄/►) to provide key input data that corresponds to a key pressed by a user to the controller 200.

The memory 206 stores a program for controlling an overall operation of the portable communication terminal. Also, the memory 206 temporarily stores data generated during operations and complementary data (e.g., telephone numbers, SMS messages, picture data, and etc.).

The movement detection unit 208 measures a movement status information of the portable communication terminal, for example, an acceleration. That is, the movement detection unit 208 measures the acceleration in three axes of X-axis, Y-axis and Z-axis and then measures a rotational angle, a slope and a movement of the portable communication terminal using a variation in the acceleration.

The camera unit 210 auto-focuses an object to be photographed and includes a Charge Coupled Device (CCD) or a Complementary Metal Oxide Semiconductor (CMOS) which receives a light signal of an object to be photographed and converts the light signal input through lenses into an electrical signal.

The communication unit 212, in a reception operation, down-converts an RF signal received through the antenna 214 and despreads and channel-decodes the received RF signal, and in a transmission operation, channel-codes and spreads data to be transmitted, up-converts a signal carrying the data and transmits the up-converted signal.

The CODEC 216 is connected to the controller 200, and the microphone 218 and the speaker 220 are connected to the CODEC 216. The CODEC 216, the microphone 218, and the speaker 220 serve as an audio input/output block for a voice communication. The CODEC 213 converts Pulse Coded Modulation (PCM) data provided from the controller 200 into analog audio signals to output the analog audio signals through the speaker 220, and converts an audio signal received through the microphone 218 into PCM data to provide the PCM data to the controller 200.

Next, a method for storing a photographed image as an erect image will be described with reference to FIGs. 3A to 3D.

FIG. 3A shows a procedure of photographing and storing the English character 'A' from a first angular orientation according to the present invention in which the photographed image is stored as an erect or upright image without any rotation. Taking the photograph from the first angular orientation shown in FIG. 3A is performed without any rotation of the portable communication terminal and thus the photographed image is an erect image. Accordingly, the photographed image is directly stored without any rotation.

FIG. 3B shows a procedure of photographing and storing the English character 'A' in a second angular orientation according to the present invention in which the photographed image is rotated and stored as an erect image. Taking the photograph from the second angular orientation shown in FIG. 3B is performed after the portable communication terminal is rotated counterclockwise by 90° and thus the photographed image is in a status rotated clockwise by 90° from an erect image. Accordingly, the photographed image is stored after being rotated counterclockwise by 90°.

FIG. 3C shows a procedure of photographing and storing the English character 'A' from a third angular orientation according to the present invention in which the photographed image is rotated and stored as an erect image. Taking the photograph from the third angular orientation shown in FIG. 3C is performed after the portable communication terminal is rotated counterclockwise by 180° and thus the photographed image is in a status rotated clockwise by 180° from an erect image. Accordingly, the photographed image is stored after being rotated counterclockwise by 180°.

FIG. 3D shows a procedure of photographing and storing the English character 'A' from a fourth angular orientation according to the present invention in which the photographed image is rotated and stored as an erect image. Taking the photograph from the fourth angular orientation shown in FIG. 3C is performed after the portable communication terminal is rotated counterclockwise by 270° and thus the photographed image is in a status rotated clockwise by 270° from an erect image. Accordingly, the photographed image is stored after being rotated counterclockwise by 270°.

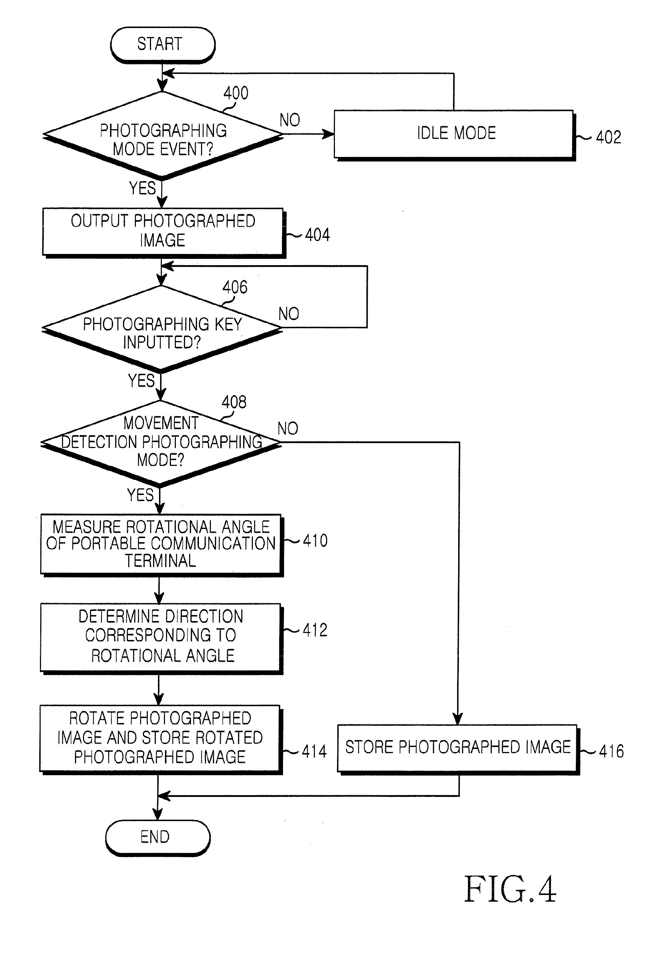

FIG. 4 is a flow chart showing a method of storing a photographed image as an erect image in a portable communication terminal according to the present invention.

The controller 200 controls the process of storing a photographed image as an erect image in a portable communication terminal as follows.

Referring to FIG. 4, in step 402, the portable communication terminal is in an idle mode. In step 400, the controller 200 determines out whether a photographing mode event takes place. When the photographing mode event does not take place, the portable communication terminal returns to step 402 and is maintained in the idle mode. When the photographing mode event takes place, the process proceeds to step 404. In step 404, the portable communication terminal outputs a photographed image and then the process proceeds to step 406. In step 406, the portable communication terminal checks whether a photographing key is input.

When the photographing key is input, the process proceeds to step 408. In step 408, the portable communication terminal checks whether a movement detection photographing mode is set. When the movement detection photographing mode is not set, the process proceeds to step 416. In step 416, an image is photographed and stored without determining whether the photographed image is an erect image.

When the movement detection photographing mode is set, the process proceeds to step 410. In step 410, the movement detection unit measures a rotational angle of the portable communication terminal and then the process proceeds to step 412. In step 412, it is determined which direction corresponds to the rotational angle among the four photographing directions and the process proceeds to step 414. In step 414, the photographed image is rotated if necessary such that it becomes an erect or upright image and then is stored.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

As described above, the present invention relates to an apparatus and method for photographing an erect image in a portable communication terminal having four photographing directions divided depending on a rotational angle of the portable communication terminal measured by a movement detection unit in which an image photographed in each of the four photographing directions is rotated and stored as an erect image. The photographed image is automatically rotated if necessary to store the image as an erect or upright image.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for photographing an erect image in a portable communication terminal, comprising:
a movement detection unit for measuring a rotational status of the portable communication terminal;
a camera unit for photographing an object; and
a controller which, when a photographing key is input and the portable communication terminal is in a movement detection photographing mode, controls the movement detection unit to measure a rotational angle of the portable communication terminal, determines a photographing direction of the portable communication terminal corresponding to the rotational angle, and rotates and stores the image photographed according to the determined photographing direction as an erect or upright image.

2. The apparatus of claim 1, wherein the movement detection unit measures an acceleration in an X-axis, Y-axis and Z-axis, and then measures the rotational angle of the portable communication terminal using a variation in the acceleration.

3. The apparatus of claim 1 or 2, wherein the controller divides a rotational direction of the portable communication terminal into a first angular orientation having a rotational angle of 0° (photographing angle), a second angular orientation having a rotational angle of 90° counterclockwise, a third angular orientation having a rotational angle of 180° counterclockwise, and a fourth angular orientation having a rotational angle of 270° counterclockwise.

4. The apparatus of claim 3, wherein the controller stores the photographed image without any rotation when the photograph is taken from the first angular orientation, rotates and stores the photographed image counterclockwise by 90° when the photograph is taken from the second angular orientation, rotates and stores the photographed image counterclockwise by 180° when the photograph is taken from the third angular orientation, and rotates and stores the photographed image counterclockwise by 270° when the photograph is taken from the fourth angular orientation.

5. The apparatus of one of claims 1 to 4, wherein the controller controls an MMS message to which the photographed image is attached such that the photographed image is output as the erect image.

6. The apparatus of one of claims 1 to 5, wherein the camera unit auto-focuses the object to be photographed prior to photographing the object.

7. A method for photographing an erect image in a portable communication terminal, the method comprising the steps of:
measuring a rotational angle of the portable communication terminal while taking a photograph;
determining a photographing direction of the portable communication terminal according to the measured rotational angle; and
rotating and storing the photographed image such that the photographed image becomes an erect or upright image.

8. The method of claim 7, wherein the step of measuring a rotational angle of the portable communication terminal is performed by measuring an acceleration in an X-axis, Y-axis, and Z-axis and then measuring the rotational angle of the portable communication terminal using a variation in the acceleration.

9. The method of claim 7 or 8, wherein the photographing direction of the portable communication terminal is divided depending on the rotational angle into a first angular orientation having a rotational angle of 0°, a second angular orientation having a rotational angle of 90° counterclockwise, a third angular orientation having a rotational angle of 180° counterclockwise, and a fourth angular orientation having a rotational angle of 270° counterclockwise.

10. The method of claim 9, wherein the step of rotating and storing the photographed image is performed by storing the photographed image without any rotation when the photograph is taken from the first angular orientation, rotating and storing the photographed image counterclockwise by 90° when the photograph is taken from the second angular orientation, rotating and storing the photographed image counterclockwise by 180° when the photograph is taken from the third angular orientation, and rotating and storing the photographed image counterclockwise by 270° when the photograph is taken from the fourth angular orientation.

11. A portable terminal for photographing an erect image, comprising:
a movement detection unit for measuring a rotational status of the portable communication terminal;
a camera unit for photographing an object; and
a controller for controlling the movement detection unit to measure a rotational angle of the portable communication terminal, determining a photographing direction of the portable communication terminal corresponding to the rotational angle, and rotating and storing the image photographed according to the determined photographing direction as an erect or upright image.

12. The portable terminal of claim 11, wherein the movement detection unit measures an acceleration in an X-axis, Y-axis and Z-axis, and then measures the rotational angle of the portable communication terminal using a variation in the acceleration.

13. A method for photographing an erect image in a portable communication terminal, the method comprising the steps of:
measuring a rotational angle of the portable communication terminal while taking a photograph;
determining a photographing direction of the portable communication terminal according to the measured rotational angle; and
storing the photographed image such that the photographed image becomes an erect or upright image.

14. The method of claim 13, wherein the step of measuring a rotational angle of the portable communication terminal is performed by measuring an acceleration in an X-axis, Y-axis, and Z-axis and then measuring the rotational angle of the portable communication terminal using a variation in the acceleration.

15. A computer-readable recording medium having recorded thereon a program for photographing an erect image in a portable communication terminal, comprising:
a first code segment, for measuring a rotational angle of the portable communication terminal while taking a photograph;
a second code segment, for determining a photographing direction of the portable communication terminal according to the measured rotational angle; and
a third code segment for storing the photographed image such that the photographed image becomes an erect or upright image.
